# FASCICULE DE BREVET EUROPEEN

(11) **EP 4 115 000 B1**
(45) Date de publication et mention de la délivrance du brevet: **27.12.2023**
(21) Numéro de dépôt: 21713726.4
(22) Date de dépôt: 25.02.2021
(51) Int. Cl.: C23C 24/10, F01D 5/28, C04B 41/50, C04B 41/52, C04B 41/85, C04B 41/87, C04B 41/89, C23C 4/11, C23C 4/134, C04B 41/00

(54) **PROCÉDÉ DE REVÊTEMENT D'UNE PIÈCE EN MATÉRIAU COMPOSITE À MATRICE CÉRAMIQUE PAR UNE BARRIÈRE ENVIRONNEMENTALE**
VERFAHREN ZUM BESCHICHTEN EINES KERAMIKMATRIXVERBUNDTEILS MIT EINER UMWELTSCHUTZBARRIERE
METHOD FOR COATING A CERAMIC MATRIX COMPOSITE PART WITH AN ENVIRONMENTAL BARRIER

(30) Priorité: 03.03.2020 FR 2002156
(43) Date de publication de la demande: 11.01.2023
(73) Titulaire: Safran Ceramics, 33185 Le Haillan (FR)
(72) Inventeur: ARNAL, Simon, 77550 MOISSY-CRAMAYEL (FR); PIN, Lisa, 77550 MOISSY-CRAMAYEL (FR)
(74) Mandataire: Cabinet Beau de Loménie
(86) Numéro de dépôt international: PCT/FR2021/050330
(87) Numéro de publication internationale: WO 2021/176164

(56) Documents cités:
- EP-A1- 3 141 631
- EP-A2- 2 284 139
- EP-A2- 2 287 136
- WO-A1-2014/143568

## Description

### Domaine Technique

L'invention concerne un procédé de revêtement d'une pièce en matériau composite à matrice céramique (CMC) par une barrière environnementale.

### Technique antérieure

Les matériaux CMC présentent de bonnes propriétés mécaniques les rendant aptes à constituer des éléments de structures et conservent avantageusement ces propriétés à températures élevées.

Ces matériaux CMC peuvent toutefois se dégrader lorsqu'ils sont utilisés à des températures élevées et dans un environnement corrosif, comme c'est le cas lorsqu'ils sont présents dans des turbines aéronautiques. Lorsque la pièce en CMC comprend une matrice de carbure de silicium (SiC), la corrosion du CMC résulte en l'oxydation du SiC en silice, qui en présence de vapeur d'eau se volatilise sous forme d'hydroxydes Si(OH)₄. Les phénomènes de corrosion entraînent une dégradation prématurée du CMC. Des revêtements de barrière environnementale (aussi appelée « EBC » de l'anglais « Environnemental Barrier Coating ») ont par conséquent été développés afin de protéger les matériaux CMC de la corrosion à haute température. Comme exemple de barrière environnementale utilisable, on peut par exemple citer des ensembles multicouches comprenant une couche de liaison en silicium et une couche d'un silicate de terre rare (de type RE₂Si₂O₇ ou RE₂SiO₅, par exemple Y₂Si₂O₇).

Différentes techniques peuvent être mises en oeuvre afin de former les barrières environnementales. On peut, en particulier, citer les procédés d'élaboration par voie sèche comme le dépôt par projection thermique ou projection plasma. Un inconvénient de ces techniques est qu'elles présentent un coût de mise en oeuvre relativement élevé. Les procédés par voie liquide comme la technique de trempage-retrait (« dip-coating ») présentent, quant à eux, un coût de mise en oeuvre réduit. Dans le cadre des techniques par voie liquide, une barrière environnementale peut être formée par application, sur la surface de la pièce, de particules de silicate de terre rare en suspension dans un milieu liquide suivie d'un séchage et d'un frittage de ces particules. Un tel procédé est par exemple décrit dans la demande de brevet EP 3 141 631 A1.

Toutefois, les barrières environnementales ainsi obtenues peuvent présenter des fissures réduisant leur étanchéité aux gaz en fonctionnement.

### Exposé de l'invention

L'invention propose, selon un premier aspect, un procédé de revêtement d'une pièce en matériau composite à matrice céramique par une barrière environnementale, le procédé comprenant les étapes suivantes :
a) appliquer sur la surface de la pièce une composition de revêtement comprenant une première poudre d'un silicate de terre rare et une deuxième poudre comprenant du bore, la composition de revêtement présentant un rapport R = [masse de la deuxième poudre]/[masse de la première poudre] compris entre 0,1% et 5%, et
b) fritter les première et deuxième poudres afin d'obtenir la barrière environnementale sur la pièce.

La fissuration de la barrière environnementale observée dans certaines barrières environnementales de l'art antérieur provient des contraintes générées lors du frittage. Afin d'éviter la fissuration de la barrière environnementale et améliorer sa densité, l'invention propose d'introduire du bore dans la composition de revêtement destinée à être frittée. Le bore est un fondant des silicates et va augmenter le fluage du revêtement à haute température et rendre le système visqueux afin d'accommoder les contraintes et éviter la fissuration. Le bore est ajouté en une teneur massique relative particulière par rapport au silicate de terre rare, c'est-à-dire telle que le rapport R soit supérieur ou égal à 0,1% de sorte à obtenir l'augmentation souhaitée pour le fluage à haute température tout en conservant un rapport R inférieur ou égal à 5% afin de ne pas affecter négativement les propriétés de la barrière environnementale obtenue.

Dans un exemple de réalisation, la deuxième poudre comprend une poudre de bore. En variante ou en combinaison, la deuxième poudre comprend une poudre d'un composé du bore, par exemple d'un composé céramique du bore. La deuxième poudre peut ainsi comprendre une poudre de carbure de bore, une poudre d'oxyde de bore, ou un mélange de ces poudres.

Dans un exemple de réalisation, le silicate de terre rare peut être un disilicate de terre rare ou un monosilicate de terre rare. En particulier, le silicate de terre rare peut être (YbₐY₁₋ₐ)₂Si₂O₇ avec a compris entre 0 et 1, a étant par exemple compris entre 0,4 et 0,6, ou (Yb_{b}Y_{1-b})₂SiO₅ avec b compris entre 0 et 1, b étant par exemple compris entre 0,4 et 0,6.

Dans un exemple de réalisation, une température supérieure ou égale à 1350°C est imposée durant le frittage.

Le fait de travailler à une température élevée pour le frittage permet d'accommoder davantage encore les contraintes et de réduire davantage encore le risque de fissuration de la barrière environnementale. En effet, les silicates de terres rares sont des matériaux qui fluent à haute température. Un traitement thermique à 1350°C diminue le module de Young du silicate de terre rare, ce qui lui permet d'accommoder et de dissiper davantage encore les contraintes rencontrées lors du frittage.

Dans un exemple de réalisation, la taille moyenne des particules de la première poudre et la taille moyenne des particules de la deuxième poudre sont chacune comprises entre 0,1 µm et 5 µm. La taille moyenne des particules de la première poudre peut être sensiblement égale à la taille moyenne des particules de la deuxième poudre.

Sauf mention contraire, une taille « moyenne » désigne la taille donnée par la distribution granulométrique statistique à la moitié de la population, dite D50.

Dans un exemple de réalisation, la composition de revêtement est appliquée sur une couche d'accrochage comprenant du silicium et présente sur la surface de la pièce. Dans un exemple de réalisation, les étapes a) et b) sont répétées afin d'obtenir la barrière environnementale.

Dans un exemple de réalisation, la surface de la pièce sur laquelle la composition de revêtement est appliquée lors de l'étape a) forme localement un angle supérieur ou égal à 15°, par exemple supérieur ou égal à 20°.

L'invention est particulièrement avantageuse dans ce cas car elle permet d'obtenir une barrière environnementale dense et non fissurée même pour une pièce ayant une ou plusieurs zones singulières où les contraintes engendrées lors du frittage sont particulièrement importantes.

Dans un exemple de réalisation, la pièce est une pièce de turbomachine.

La pièce peut être une pièce de partie chaude d'une turbine à gaz d'un moteur aéronautique ou d'une turbine industrielle. En particulier, la pièce peut constituer une partie au moins d'un distributeur, une paroi d'une chambre de combustion, un secteur d'anneau de turbine ou une aube de turbomachine.

### Brève description des dessins

[Fig. 1] La figure 1 représente, de manière schématique, une pièce revêtue par une barrière environnementale dans le cadre d'un premier exemple de procédé selon l'invention.
[Fig. 2] La figure 2 représente, de manière schématique, une pièce revêtue par une barrière environnementale dans le cadre d'un deuxième exemple de procédé selon l'invention.
[Fig. 3] La figure 3 est une photographie obtenue par microscopie électronique à balayage d'une pièce revêtue par une barrière environnementale dans le cadre d'un procédé hors invention.
[Fig. 4] La figure 4 est une photographie obtenue par microscopie électronique à balayage d'une pièce revêtue par une barrière environnementale dans le cadre d'un procédé selon l'invention.
[Fig. 5] La figure 5 est une photographie obtenue par microscopie électronique à balayage d'une pièce revêtue par une barrière environnementale dans le cadre d'un procédé selon l'invention dans une zone singulière de la pièce.

### Description des modes de réalisation

La pièce en matériau composite destinée à être revêtue par la barrière environnementale comprend un renfort fibreux ainsi qu'une matrice céramique présente dans la porosité du renfort fibreux.

Le renfort fibreux peut comprendre des fibres céramiques ou des fibres de carbone. Les fibres céramiques peuvent être des fibres de carbure de silicium ou des fibres oxydes, comme des fibres d'alumine. A ce titre, on peut citer les fibres de carbure de silicium fournies sous la dénomination « Nicalon » ou « Hi-Nicalon » par la société japonaise NGS ou « Tyranno SA3 » par la société UBE. Le renfort fibreux peut comporter des fibres de carbure de silicium présentant une teneur en oxygène inférieure ou égale à 1% en pourcentage atomique, telles que les fibres fournies sous la dénomination « Hi-Nicalon-S » par la société japonaise NGS. Lorsque le renfort fibreux comporte des fibres d'alumine, ces dernières peuvent être des fibres Nextel 610^{™}. Les fibres fournies sous la dénomination Torayca T300 par la société Toray constituent quant à elles un exemple de fibres de carbone utilisables.

Le renfort fibreux peut être réalisé en une seule pièce par tissage tridimensionnel ou multicouches. Par « tissage tridimensionnel » ou « tissage 3D », il faut comprendre un mode de tissage par lequel certains au moins des fils de chaîne lient des fils de trame sur plusieurs couches de trame. Une inversion des rôles entre chaîne et trame est possible dans le présent texte et doit être considérée comme couverte aussi par les revendications. Le renfort fibreux peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, le renfort fibreux peut présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Différents modes de tissage multicouches utilisables pour former le renfort fibreux sont notamment décrits dans le document WO 2006/136755.

En variante, le renfort fibreux peut être obtenu à partir d'une pluralité de strates fibreuses de tissu bidimensionnel ou unidirectionnelles par drapage de ces strates sur une forme. Ces strates peuvent éventuellement être liées entre elles par exemple par couture ou implantation de fils pour former le renfort fibreux.

La pièce peut en outre comporter une interphase présentes entres les fibres et la matrice. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone). L'épaisseur de l'interphase peut par exemple être comprise entre 10 nm et 1000 nm, et par exemple entre 10 nm et 100 nm. L'interphase a ici une fonction de défragilisation du matériau composite qui favorise la déviation de fissures éventuelles parvenant à l'interphase après s'être propagées dans la matrice, empêchant ou retardant la rupture de fibres par de telles fissures.

La matrice densifie le renfort fibreux en étant présente dans la porosité de ce dernier. La matrice enrobe les fibres du renfort fibreux. Les fibres sont présentes dans la matrice. La matrice peut occuper la majorité (i.e. plus de 50%) du volume de la porosité accessible du renfort fibreux. En particulier, la matrice peut occuper plus de 75%, voire sensiblement l'intégralité, du volume de cette porosité accessible. La matrice comprend une ou plusieurs phases en matériau céramique. La matrice peut comporter au moins une phase d'un carbure, nitrure ou oxyde. La matrice peut par exemple comporter du carbure de silicium, voire être entièrement en carbure de silicium. La matrice peut être réalisée de différentes manières connues en soi. On peut par exemple utiliser une méthode de densification par voie liquide (imprégnation par une résine précurseur de la matrice et transformation par réticulation et pyrolyse, le processus pouvant être répété) ou par voie gazeuse (infiltration chimique en phase vapeur de la matrice). On peut encore réaliser la phase de matrice par infiltration de silicium à l'état fondu (procédé de « Melt-Infiltration »).

La pièce peut être une pièce statique ou rotative de turbomachine. Des exemples de pièces de turbomachine qui peuvent être revêtues dans le cadre de l'invention sont mentionnés plus haut.

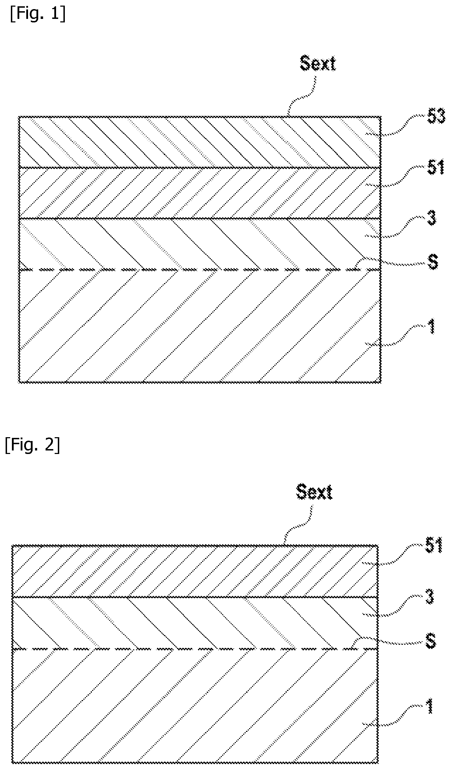

On a représenté à la figure 1 un premier exemple de barrière environnementale recouvrant une pièce 1 en CMC. Dans cet exemple, la barrière environnementale est multi-couches, comprenant ici deux couches 51 et 53 comprenant chacune un silicate de terre rare.

Pour réaliser chacune des couches 51 et 53, la composition de revêtement a été appliquée sur la surface S de la pièce 1 en CMC (étape a)). En l'occurrence, la composition de revêtement a été appliquée sur une couche d'accrochage 3 comprenant du silicium et présente sur la surface S de la pièce 1. Dans cet exemple, la composition de revêtement est directement appliquée sur la couche d'accrochage 3 (au contact de cette dernière). Cette couche d'accrochage 3 peut être une couche en silicium ou en siliciure métallique. On ne sort toutefois pas du cadre de l'invention lorsque la composition de revêtement est directement appliquée sur la surface de la pièce en CMC (au contact de cette dernière en l'absence de couche d'accrochage 3). La composition de revêtement peut être appliquée par différentes méthodes connues en soi. On peut appliquer la composition de revêtement par voie liquide, par exemple par trempage-retrait (« dip-coating »), centrifugation (« spin-coating »), pulvérisation (« spray-coating ») ou électrodéposition, notamment par électrophorèse. La composition de revêtement peut encore être déposée par projection thermique, par exemple par projection plasma de suspension.

Comme indiqué plus haut, la composition de revêtement comprend une première poudre d'un silicate de terre rare et une deuxième poudre comprenant du bore qui est distincte de la première poudre. Le bore est formulé en une teneur particulière de sorte à ce que le rapport R défini plus haut soit compris entre 0,1% et 5%. Quel que soit l'exemple de réalisation considéré, le rapport R peut par exemple être compris entre 0,1% et 2%, et par exemple être sensiblement égal à 1%.

La composition de revêtement peut être sous la forme d'une suspension comprenant les première et deuxième poudres dans un milieu liquide. En variante, la composition de revêtement peut être sous forme solide et pulvérulente.

Lorsque la composition de revêtement est sous la forme d'une suspension, la composition de revêtement peut comporter :
- la première poudre en une teneur volumique comprise entre 1% et 30%,
- la deuxième poudre en une teneur volumique comprise entre 0,1% et 5%, et
- le milieu liquide en une teneur volumique comprise entre 65% et 98,9%.

Lorsque la composition de revêtement est sous forme solide et pulvérulente, la composition de revêtement peut comporter :
- la première poudre en une teneur volumique comprise entre 95% et 99,9%, et
- la deuxième poudre en une teneur volumique comprise entre 0,1% et 5%.

La composition de revêtement peut être constituée essentiellement par la première poudre, la deuxième poudre et le milieu liquide éventuellement présent.

Comme indiqué plus haut, le silicate de terre rare peut être (YbₐY₁₋ₐ)₂Si₂O₇ avec a compris entre 0 et 1, a étant par exemple compris entre 0,4 et 0,6, ou (Yb_{b}Y_{1-b})₂SiO₅ avec b compris entre 0 et 1, b étant par exemple compris entre 0,4 et 0,6. Quel que soit l'exemple de réalisation considéré, la deuxième poudre peut être une poudre de bore (élément B), une poudre de carbure de bore (B₄C), une poudre d'oxyde de bore (B₂O₃), ou un mélange de ces poudres.

Une fois appliquée, on soumet la composition de revêtement à un traitement thermique qui va permettre l'élimination du milieu liquide éventuellement utilisé et de réaliser le frittage des poudres en présence de sorte à obtenir la couche de barrière environnementale (étape b)).

Une température supérieure ou égale à 1000°C, par exemple supérieure ou égale à 1350°C, peut être imposée durant le frittage. La température imposée durant le frittage peut être comprise entre 1000°C et 1400°C, par exemple entre 1350°C et 1400°C.

Dans l'exemple illustré à la figure 1, on a répété les étapes a) et b) afin d'obtenir la barrière environnementale qui présente les deux couches 51 et 53. La première couche 51 peut comprendre un disilicate de terre rare et la deuxième couche 53 un monosilicate de terre rare. Chacune de ces couches comprend du bore afin de réduire la fissuration du revêtement lors du frittage, comme évoqué plus haut. Lors de la répétition des étapes a) et b) on peut appliquer des silicates de terre rare différents dans différentes couches de la barrière environnementale et/ou des deuxièmes poudres différentes. La barrière environnementale, et en particulier la deuxième couche 53 dans l'exemple illustré, définit la surface externe Sₑₓₜ de la pièce revêtue. Cette surface Sₑₓₜ est par exemple destinée à être en contact avec le flux de gaz chaud circulant dans la veine lorsque la pièce est une pièce de turbomachine. On a représenté une barrière environnementale multi-couches ayant deux couches mais on ne sort pas du cadre de l'invention si la barrière environnementale comprend plus de deux couches comprenant chacune un silicate de terre rare.

La figure 2 illustre un autre exemple de pièce revêtue par une barrière environnementale dans laquelle la barrière environnementale est, cette fois-ci, monocouche, comprenant uniquement la couche 51. Les mêmes caractéristiques décrites plus haut pour la figure 1 s'appliquent à la figure 2.

Quel que soit l'exemple de réalisation considéré, l'épaisseur de la barrière environnementale obtenue peut être supérieure ou égale à 1 µm, par exemple à 10 µm. L'épaisseur de la barrière environnementale peut, en particulier, être comprise entre 1 µm et 200 µm, par exemple entre 10 µm et 200 µm.

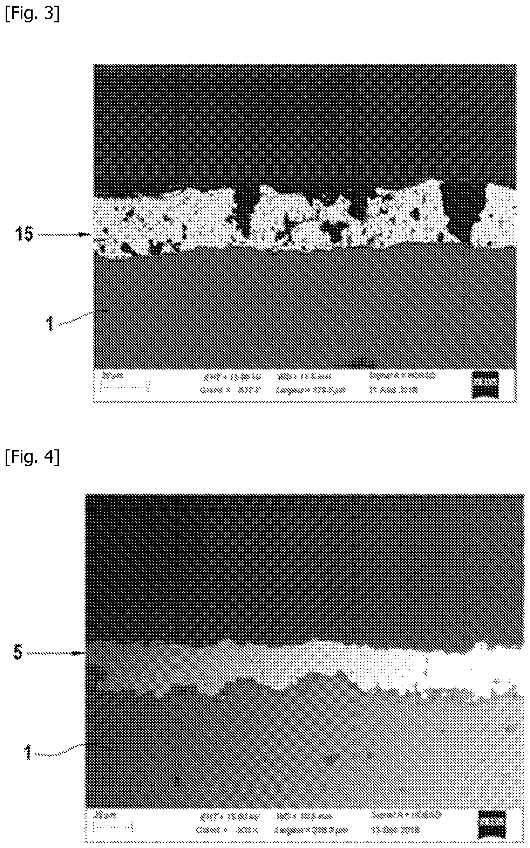

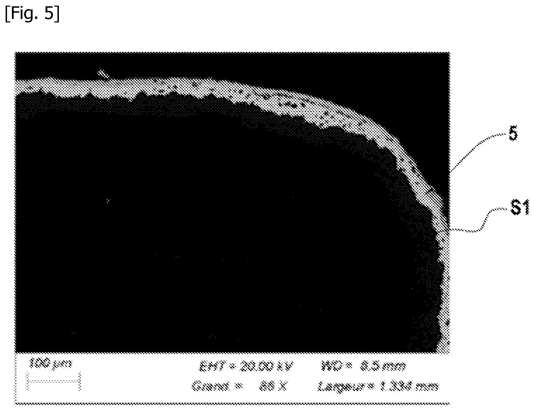

La figure 3 illustre une barrière environnementale 15 formée par un procédé hors invention sans ajout de bore dans la composition de revêtement (température de frittage de 1300°C). On constate une fissuration de la barrière environnementale formée. La figure 4 montre le résultat obtenu par mise en oeuvre de l'invention où l'on voit que la barrière environnementale 5 formée sur la pièce 1 n'est pas fissurée du fait de l'ajout de bore à la composition de revêtement (rapport R pris égal à 1% et température de frittage de 1350°C dans l'essai réalisé). De même, la figure 5 montre une bonne santé matière de la barrière environnementale obtenue même si la surface S1 revêtue présente une singularité (rapport R pris égal à 1% dans l'essai réalisé et température de frittage de 1350°C).

L'expression « compris(e) entre ... et ... » doit se comprendre comme incluant les bornes.

## Revendications

1. Procédé de revêtement d'une pièce (1) en matériau composite à matrice céramique par une barrière environnementale (5 ; 51 ; 53), le procédé comprenant les étapes suivantes :
a) appliquer sur la surface (S ; S1) de la pièce une composition de revêtement comprenant une première poudre d'un silicate de terre rare et une deuxième poudre comprenant du bore, la composition de revêtement présentant un rapport R = [masse de la deuxième poudre]/[masse de la première poudre] compris entre 0,1% et 5%, et
b) fritter les première et deuxième poudres afin d'obtenir la barrière environnementale sur la pièce.

2. Procédé selon la revendication 1, dans lequel la deuxième poudre comprend une poudre de bore.

3. Procédé selon la revendication 1 ou 2, dans lequel la deuxième poudre comprend une poudre de carbure de bore, une poudre d'oxyde de bore, ou un mélange de ces poudres.

4. Procédé selon l'une quelconque des revendications 1 à 3, dans lequel le silicate de terre rare est (YbₐY₁₋ₐ)₂Si₂O₇ avec a compris entre 0 et 1, ou (Yb_{b}Y_{1-b})₂SiO₅ avec b compris entre 0 et 1.

5. Procédé selon l'une quelconque des revendications 1 à 4, dans lequel une température supérieure ou égale à 1350°C est imposée durant le frittage.

6. Procédé selon l'une quelconque des revendications 1 à 5, dans lequel la taille moyenne des particules de la première poudre et la taille moyenne des particules de la deuxième poudre sont chacune comprises entre 0,1 µm et 5 µm.

7. Procédé selon l'une quelconque des revendications 1 à 6, dans lequel la composition de revêtement est appliquée sur une couche d'accrochage (3) comprenant du silicium et présente sur la surface de la pièce.

8. Procédé selon l'une quelconque des revendications 1 à 7, dans lequel les étapes a) et b) sont répétées afin d'obtenir la barrière environnementale (51 ; 53).

9. Procédé selon l'une quelconque des revendications 1 à 8, dans lequel la surface (S1) de la pièce sur laquelle la composition de revêtement est appliquée lors de l'étape a) forme localement un angle supérieur ou égal à 15°.

10. Procédé selon l'une quelconque des revendications 1 à 9, dans lequel la pièce (1) est une pièce de turbomachine.

## Patentansprüche

1. Verfahren zur Beschichtung eines Teils (1) aus Verbundmaterial mit keramischer Matrix mit einer Umgebungsbarriere (5; 51; 53), wobei das Verfahren die folgenden Schritte umfasst:
a) Auftragen einer Beschichtungszusammensetzung umfassend ein erstes Pulver eines Seltene-Erden-Silikats und ein zweites Pulver, das Bor umfasst, auf die Oberfläche (S; S1) des Teils, wobei die Beschichtungszusammensetzung ein Verhältnis R = [Masse des zweiten Pulvers]/[Masse des ersten Pulvers] zwischen 0,1 % und 5 % aufweist, und
b) Sintern des ersten und zweiten Pulvers, um die Umgebungsbarriere auf dem Teil zu erhalten.

2. Verfahren nach Anspruch 1, wobei das zweite Pulver ein Bor-Pulver umfasst.

3. Verfahren nach Anspruch 1 oder 2, wobei das zweite Pulver ein Borkarbid-Pulver, ein Boroxid-Pulver oder eine Mischung dieser Pulver umfasst.

4. Verfahren nach einem der Ansprüche 1 bis 3, wobei das Seltene-Erden-Silikat (YbₐY₁₋ₐ)₂Si₂O₇ mit a zwischen 0 und 1, oder (Yb_{b}Y_{1-b}) ₂SiO₅ mit b zwischen 0 und 1 ist.

5. Verfahren nach einem der Ansprüche 1 bis 4, wobei während des Sinterns eine Temperatur von 1.350 °C oder höher eingestellt wird.

6. Verfahren nach einem der Ansprüche 1 bis 5, wobei die mittlere Partikelgröße des ersten Pulvers und die mittlere Partikelgröße des zweiten Pulvers jeweils zwischen 0,1 µm und 5 µm betragen.

7. Verfahren nach einem der Ansprüche 1 bis 6, wobei die Beschichtungszusammensetzung auf eine Haftschicht (3) aufgetragen wird, die Silizium umfasst und auf der Oberfläche des Teils vorliegt.

8. Verfahren nach einem der Ansprüche 1 bis 7, wobei die Schritte a) und b) wiederholt werden, um die Umgebungsbarriere (51; 53) zu erhalten.

9. Verfahren nach einem der Ansprüche 1 bis 8, wobei die Oberfläche (S1) des Teils, auf welche die Beschichtungszusammensetzung während des Schritts a) aufgetragen wird, lokal einen Winkel von mehr als oder gleich 15° bildet.

10. Verfahren nach einem der Ansprüche 1 bis 9, wobei der Teil (1) ein Teil einer Turbomaschine ist.

## Claims

1. A method for coating a ceramic matrix composite part (1) with an environmental barrier (5; 51; 53), the method comprising the following steps:
a) applying, to the surface (S; S1) of the part, a coating composition comprising a first powder of a rare earth silicate and a second powder comprising boron, the coating composition having a ratio R = [mass of the second powder]/[mass of the first powder] of between 0.1% and 5%, and
b) sintering the first and second powders in order to obtain the environmental barrier on the part.

2. The method according to claim 1, in which the second powder comprises a boron powder.

3. The method according to claim 1 or 2, in which the second powder comprises a boron carbide powder, a boron oxide powder, or a mixture of these powders.

4. The method according to any one of claims 1 to 3, in which the rare earth silicate is (YbₐY₁₋ₐ)₂Si₂O₇ in which a is between 0 and 1, or (Yb_{b}Y_{1-b})₂SiO₅ in which b is between 0 and 1.

5. The method according to any one of claims 1 to 4, in which a temperature greater than or equal to 1350°C is applied during the sintering.

6. The method according to any one of claims 1 to 5, in which the average size of the particles of the first powder and the average size of the particles of the second powder are each between 0.1 µm and 5 µm.

7. The method according to any one of claims 1 to 6, in which the coating composition is applied to a bonding layer (3) comprising silicon and present on the surface of the part.

8. The method according to any one of claims 1 to 7, in which steps a) and b) are repeated in order to obtain the environmental barrier (51; 53).

9. The method according to any one of claims 1 to 8, in which the surface (S1) of the part to which the coating composition is applied during step a) locally forms an angle greater than or equal to 15°.

10. The method according to any one of claims 1 to 9, in which the part (1) is a turbomachine part.
